# EUROPÄISCHE PATENTSCHRIFT

(11) **EP 4 514 640 B1**
(45) Veröffentlichungstag und Bekanntmachung des Hinweises auf die Patenterteilung: **29.04.2026**
(21) Anmeldenummer: 23709658.1
(22) Anmeldetag: 03.03.2023
(51) Int. Cl.: B60K 35/23, B60K 35/28, B60K 35/29, B60W 50/14, G03B 15/05, G03B 21/20

(54) **VERFAHREN UND VORRICHTUNG ZUM PROJIZIEREN VON OBJEKTEN**
METHOD AND DEVICE FOR PROJECTING OBJECTS
PROCÉDÉ ET DISPOSITIF DE PROJECTION D'OBJETS

(30) Priorität: 25.04.2022 DE 102022203951
(43) Veröffentlichungstag der Anmeldung: 05.03.2025
(73) Patentinhaber: Stellantis Auto SAS, 78300 Poissy (FR)
(72) Erfinder: ROECKL, Philipp, 65428 Rüsselsheim am Main (DE)
(74) Vertreter: ESIP
(86) Internationale Anmeldenummer: PCT/EP2023/055477
(87) Internationale Veröffentlichungsnummer: WO 2023/208457

(56) Entgegenhaltungen:
- US-A1- 2017 261 315
- US-A1- 2019 344 713
- US-A1- 2021 107 356

## Beschreibung

Die vorliegende Offenbarung betrifft im Allgemeinen Projektionsverfahren. Im Speziellen betrifft die vorliegende Offenbarung ein Verfahren und eine Vorrichtung zum Projizieren von Objekten mittels einer Projektionsvorrichtung eines Fahrzeugs.

Es sind Verfahren zum Projizieren von Objekten bekannt. Insbesondere sind Verfahren zum Projizieren von als Verkehrshinweise und/oder Orientierungshilfe dienenden Projektionsobjekten, wie Symbole und/oder geometrische Figuren, auf eine Fahrbahnoberfläche bekannt. Die Projektionsobjekte können relevante Informationen für einen Fahrer eines Fahrzeugs liefern und so zur Verbesserung der Fahrzeugsteuerung beitragen. Beim Projizieren von Objekten kann es jedoch zu Situationen kommen, wenn das Fahrerassistenzsystem die projizierten Objekte von realen Objekten, wie beispielsweise Straßenmarkierungen, in der Fahrzeugumgebung nicht richtig unterscheiden kann. Die Verwechslung von projizierten Objekten mit realen Objekten beim Erfassen der Fahrzeugumgebung durch das Fahrerassistenzsystem kann zu Störungen in der Fahrzeugsteuerung und sogar zu lebensgefährlichen Situationen führen.

Aus der US 2019/0344713 A1 ist ein Scheinwerfersystem mit zwei Scheinwerfern für ein Fahrzeug mit einem kamerabasierten Blickerfassungsmodul bekannt.

US 2021/0107356 A1 betrifft ein Head-up-Display und ein Verfahren zur dessen Steuerung.

Ferner beschreibt die US 2017/0261315 A1 eine Verfahren sowie eine Einrichtung zum Berechnen einer Eigenposition eines Fahrzeugs mit einen Lichtprojektor und einer Bilderfassungseinheit.

Eine Aufgabe der Ausführungsformen der vorliegenden Offenbarung ist es, ein verbessertes Verfahren zum Projizieren von Objekten bereitzustellen, welches es ermöglicht, eine Beeinträchtigung der Erfassung der Fahrzeugumgebung durch projizierte Objekte zu reduzieren.

Zur Lösung dieser Aufgabe wird nach einem ersten Aspekt ein Verfahren zum Projizieren von Objekten bereitgestellt, wobei die Objekte mittels einer Projektionsvorrichtung eines Fahrzeugs projiziert werden. Die Projektionsvorrichtung ist dazu ausgebildet, ein Projektionsobjekt innerhalb eines einstellbaren wenigstens teilweise von einem Blickfeld einer Fahrzeugkamera bzw. eines Kamerasystems erfassbaren Projektionsfelds zu projizieren. Als projizierte Objekte werden insbesondere durch den Fahrer wahrnehmbare Bilder bzw. Symbole verstanden, welche auf die Fahrbahn und/oder auf andere Oberflächen, wie beispielsweise Gebäudewände, projiziert werden, um insbesondere dem Fahrer des Fahrzeugs als Orientierungshilfe und/oder als Verkehrshinweis zu dienen. Insbesondere können die Objekte Pfeile und/oder Linien als Wegweiser bzw. Guiding-Lines für die Unterstützung der Fahrzeugsteuerung umfassen. Die projizierten Objekte können insbesondere normierte Symbole mit vordefinierter Hinweisfunktionen für den Fahrzeugfahrer bzw. für das Fahrerassistenzsystem umfassen. Insbesondere kann eine Störung durch ein neben und/oder entgegen dem Fahrzeug verursachtes Fremdfahrzeug verursacht sein.

Das Projektionsfeld bzw. Projektionsbereich kann insbesondere einen oder mehrere Fahrbahnbereiche in der Fahrzeugumgebung umfassen, in welchem die Projektionsobjekte durch die Projektionsvorrichtung projiziert werden können. Insbesondere kann das Projektionsfeld einen oder mehrere Bereiche auf einem vor dem Fahrzeug liegenden Fahrbahnabschnitt umfassen.

Das Verfahren umfasst Ermitteln eines Sollprojektionsfelds zum Einstellen des einstellbaren Projektionsfelds und Einstellen des Projektionsfelds gemäß dem ermittelten Sollprojektionsfeld. Das Einstellen des Projektionsfelds gemäß dem Sollprojektionsfeld kann insbesondere durch Ansteuern der Projektionsvorrichtung mittels einer Steuervorrichtung erfolgen.

Das Ermitteln des Sollprojektionsfeld umfasst Erfassen wenigstens eines aktuellen Betriebsparameters des Fahrzeugs und Ermitteln eines ersten dem wenigstens einen Betriebsparameter entsprechenden Sollprojektionsfelds. Das Erfassen des wenigstens einen aktuellen Betriebsparameters des Fahrzeugs kann insbesondere mittels einer Sensorik bzw. Fahrzeug-Sensorik erfolgen. Der wenigstens eine aktuelle Betriebsparameter kann insbesondere eine oder mehrere einen aktuellen Fahrzustand des Fahrzeugs charakterisierenden Parameter umfassen. Das Sollprojektionsfeld kann somit gemäß dem aktuellen Fahrzustand des Fahrzeugs eingestellt werden.

Das Ermitteln des Sollprojektionsfeld umfasst ferner Überprüfen, ob ein von dem Sollprojektionsfeld freibleibendes Restblickfeld der Fahrzeugkamera einem Hinlänglichkeitskriterium zum Erfassen einer Umgebung durch die Fahrzeugkamera genügen würde. Ergibt die Überprüfung, dass das Hinlänglichkeitskriterium nicht erfüllt ist, so wird ein zweites korrigiertes Sollprojektionsfeld basierend auf dem ersten Sollprojektionsfeld und auf dem Hinlänglichkeitskriterium ermittelt und das zweite Sollprojektionsfeld als neues Sollprojektionsfeld zum Einstellen des Projektionsfeld der Projektionsvorrichtung verwendet, damit das von dem Sollprojektionsfeld freies Restblickfeld dem ZK zum Erfassen der Umgebung durch die Fahrzeugkamera genügt. Das Hinlänglichkeitskriterium kann insbesondere eine oder mehrere Bedingungen umfassen, welche das Restblickfeld für eine adäquate Erfassung der Umgebung durch die Fahrzeugkamera erfüllen muss. Eine adäquate Erfassung der Umgebung bedeutet in diesem Zusammenhang, dass die Erfassung der Umgebung durch die Fahrzeugkamera dem Fahrerassistenzsystem ausreichende bzw. zuverlässige Informationen über die Umgebung zur Verwirklichung seiner Funktionen, wie Spurenhaltung, automatische Bremsfunktion o.ä., liefern kann. Durch die Verwendung des korrigierten Sollprojektionsfelds kann insbesondere das Projektionsfeld so angepasst werden, dass das Restblickfeld bzw. das von dem Projektionsfeld freie Blickfeld der Fahrzeugkamera für eine zuverlässige Erfassung der Umgebung ausreicht. Das Einhalten des Hinlänglichkeitskriteriums durch das Restblickfeld kann somit das Fahrerassistenzsystem vor Beeinträchtigungen durch Projektionen in dem Projektionsfeld schützen.

Der wenigstens eine Betriebsparameter kann eine aktuelle Fahrgeschwindigkeit und/oder einen aktuellen Kurvenradius des Fahrzeugs umfassen. Das Sollprojektionsfeld kann insbesondere anhand einer funktionalen Abhängigkeit auf der Basis der aktuellen Geschwindigkeit und/oder des aktuellen Kurvenradius des Fahrzeugs ermittelt werden. Das Sollprojektionsfeld kann im Wesentlichen in Form eines sich vor dem Fahrzeug befindenden und entlang der Fahrbahn erstreckenden länglichen Streifens ausgebildet sein. Insbesondere kann das Sollprojektionsfeld eine Länge sowie einen Biegungsradius aufweisen, welche mit der Fahrzeuggeschwindigkeit und Kurvenradius korrelieren. Die Länge und die Biegung des Sollprojektionsfeld können sich beispielsweise in Abhängigkeit von der aktuellen Geschwindigkeit und/oder von dem aktuellen Kurvenradius so ändern, dass die visuelle Wahrnehmbarkeit von projizierten Objekten durch den Fahrer während der Fahrt verbessert wird. Beispielsweise kann sich die Länge des Projektionsfelds bei hohen Geschwindigkeiten vergrößern und der Biegeradius des Projektionsfelds in scharfen Kurven verkürzen.

Das Hinlänglichkeitskriterium kann eine Bedingung beinhalten, dass das Restblickfeld ein Kernblickfeld der Fahrzeugkamera umfasst. Die Erfüllung des Hinlänglichkeitskriteriums mit dieser Bedingung bedeutet insbesondere, dass das Kernblickfeld außerhalb des Projektionsfelds liegt und somit frei von Projektionen bzw. Projektionsobjekten ist. Das Kernblickfeld der Fahrzeugkamera kann insbesondere einen Teil des Blickfelds umfassen, in welchem erfahrungsgemäß für das Fahrerassistenzsystem wichtige Umgebungsmerkmale, wie beispielsweise Straßenmarkierungen, erscheinen können. Insbesondere kann das Kernblickfeld der Fahrzeugkamera einen Bereich des Blickfelds umfassen, dessen Erfassung durch die Fahrzeugkamera für wesentliche insbesondere sicherheitsrelevante Funktionalitäten bzw. Kernfunktionen des Fahrerassistenzsystems ausreicht.

Das Hinlänglichkeitskriterium kann eine Bedingung beinhalten, dass zwischen dem Projektionsfeld und einer Vorderseite des Fahrzeugs ein vordefinierter Mindestabstand eingehalten ist. Durch die Einhaltung des Mindestabstands zwischen dem Projektionsfeld und der Vorderseite des Fahrzeugs kann dafür gesorgt werden, dass die Fahrzeugkamera die Fahrbahn in der unmittelbaren Nähe des Fahrzeugs ohne Beeinträchtigung durch Projektionen erfassen kann.

Das Hinlänglichkeitskriterium kann eine Bedingung beinhalten, dass zwischen dem Projektionsfeld und einem vorausfahrenden Fahrzeug ein vordefinierter Mindestabstand eingehalten ist. Durch die Einhaltung des vordefinierten Mindestabstands zwischen dem Projektionsfeld und dem vorausfahrenden Fahrzeug kann dafür gesorgt werden, dass die Fahrzeugkamera die Fahrbahn in der unmittelbaren Nähe des vorausfahrenden Fahrzeugs ohne Beeinträchtigung durch Projektionen erfassen kann.

Das Verfahren kann Ermitteln einer oder mehrerer Korrekturmaßnahmen zum Anpassen eines aktuellen Projektionsfelds umfassen, wobei das Einstellen des Projektionsfelds das Anpassen des aktuellen Projektionsfelds gemäß dem ermittelten einen oder mehreren Korrekturmaßnahmen umfasst. Durch das Anpassen des aktuellen bzw. bereits bestehenden Projektionsfelds kann die Einstellung des Projektionsfelds auf das Sollprojektionsfeld vereinfacht bzw. beschleunigt werden.

Die eine oder mehrere Korrekturmaßnahmen können eine Verschiebung und/oder eine Verformung des aktuellen Projektionsfelds umfassen. Insbesondere kann die Verformung des Projektionsfelds eine Änderung der Länge des Projektionsfelds umfassen. Durch die Verschiebung des Projektionsfelds bzw. durch die Änderung der Länge des Projektionsfelds kann das Projektionsfeld auf einfache Weise eingestellt werden.

Nach einem zweiten Aspekt wird eine Vorrichtung zum Projizieren von Objekten bereitgestellt. Die Vorrichtung umfasst eine Projektionsvorrichtung, wobei die Projektionsvorrichtung dazu ausgebildet ist, ein bzw. mehrere Projektionsobjekte innerhalb eines einstellbaren wenigstens teilweise von einem Blickfeld einer Fahrzeugkamera erfassbaren Projektionsfelds zu projizieren. Die Vorrichtung umfasst ferner eine Auswerteeinheit zum Ermitteln eines Sollprojektionsfelds und eine Steuereinheit zum Ansteuern der Projektionsvorrichtung, so dass das Projektionsfeld gemäß dem ermittelten Sollprojektionsfeld eingestellt werden kann. Die Auswerteeinheit ist dazu ausgebildet, wenigstens einen insbesondere von einer Sensorik empfangenen aktuellen Betriebsparameter des Fahrzeugs auszuwerten und ein erstes dem wenigstens einem aktuellen Betriebsparameter entsprechendes Sollprojektionsfeld zu ermitteln. Die Auswerteeinheit ist ferner dazu ausgebildet, zu überprüfen, ob ein von dem ersten Sollprojektionsfeld freibleibendes Restblickfeld der Fahrzeugkamera einem vordefinierten Hinlänglichkeitskriterium zum Erfassen einer Umgebung durch die Fahrzeugkamera genügen würde, und wenn nicht, basierend auf dem ersten Sollprojektionsfeld und auf dem Hinlänglichkeitskriterium ein zweites korrigiertes Sollprojektionsfeld zu ermitteln und der Steuereinheit zum Verwenden als neues Sollprojektionsfeld zum Einstellen des Projektionsfelds bereitzustellen. Durch die Verwendung des zweiten Sollprojektionsfelds kann insbesondere das Projektionsfeld so angepasst werden, dass das Restblickfeld bzw. das von dem Projektionsfeld freie Blickfeld der Fahrzeugkamera für eine zuverlässige Erfassung der Umgebung ausreicht. Das Einhalten des Hinlänglichkeitskriteriums durch das Restblickfeld kann somit das Fahrerassistenzsystem vor Beeinträchtigungen durch die in dem Projektionsfeld auftretenden Projektionen schützen.

Die Projektionsvorrichtung kann insbesondere als Teil eines Fahrerassistenzsystems des Fahrzeugs, beispielsweise als Teil bzw. Modul eines Fahrzeugscheinwerfers oder auch als eine separate Vorrichtung, ausgebildet sein. Insbesondere kann die Projektionsvorrichtung ein oder mehrere Projektionsmodule eines LED-Scheinwerfers umfassen, die in einem linken und/oder in einem rechten Fahrzeugscheinwerfer untergebracht sein können.

Die wenigstens eine Fahrzeugkamera kann insbesondere als Teil eines Frontkamerasystems des Fahrzeugs oder als eine separate Kamera, insbesondere als eine Digitalkamera, ausgebildet sein. Die Auswerteeinheit kann insbesondere einen Prozessor und eine Speichereinheit zum Speichern von maschinenlesbaren Instruktionen und Daten für den Prozessor aufweisen, wobei die maschinenlesbaren Instruktionen Anweisungen für den Prozessor enthalten können, die aktuellen Betriebsparameter des Fahrzeugs auszuwerten. Die Auswerteeinheit kann insbesondere als eine separate Einheit, als Teil der Fahrzeugkamera oder als Teil des Steuergeräts des Fahrzeugs ausgebildet sein.

Die Projektionsvorrichtung kann dazu ausgebildet sein, ein Objekt auf die Fahrbahnoberfläche zu projizieren, welches eine oder mehrere Längslinien zur Visualisierung der Fahrzeugdimensionen umfasst, wobei die Längslinien eine oder mehrere charakteristische Unterbrechungen aufweisen. Die Längslinien können insbesondere als gestrichelte Linien geformt sein, so dass sie anhand der Unterbrechungen besser von Straßenmarkierungen bzw. Fahrbahnmarkierungen in Form von durchgezogenen Linien abgegrenzt werden können.

Die Auswerteeinheit kann dazu ausgebildet sein, eine oder mehrere Korrekturmaßnahmen zum Anpassen eines aktuellen Projektionsfelds zu ermitteln, so dass das Einstellen des Projektionsfelds durch das Anpassen des aktuellen Projektionsfelds gemäß der ermittelten einen oder mehreren Korrekturmaßnahmen erfolgen kann. Von dem aktuellen Projektionsfeld ausgehend können somit Korrekturmaßnahmen ermittelt werden, so dass die Einstellung des Projektionsfelds auf das Sollprojektionsfeld vereinfacht bzw. beschleunigt werden kann.

Nach einem dritten Aspekt wird ein Fahrzeug angegeben, wobei das Fahrzeug ein Fahrerassistenzsystem, eine Fahrzeugkamera zum Erfassen einer Umgebung des Fahrzeugs für das Fahrerassistenzsystem und wenigstens eine Vorrichtung zum Projizieren von Objekten gemäß dem zweiten Aspekt aufweist. Das Fahrzeug zeichnet sich durch eine zuverlässige Erfassung der Umgebung durch das Fahrerassistenzsystem, wodurch auch die Fahrsicherheit und die Fahrerfahrung insgesamt verbessert werden kann.

Die Erfindung wird nun anhand der beigefügten Figuren näher erläutert. Für gleiche oder gleichwirkende Teile werden in den Figuren gleiche Bezugszeichen verwendet.
- Fig. 1: zeigt schematisch ein Fahrzeug mit einer Vorrichtung zum Projizieren von Objekten gemäß einem Ausführungsbeispiel,
- Fig. 2: zeigt schematisch ein Fahrzeug gemäß Fig. 1 in einer ersten Verkehrssituation,
- Fig. 3: zeigt schematisch ein Fahrzeug gemäß Fig. 1 in einer zweiten Verkehrssituation,
- Fig. 4: zeigt schematisch ein Fahrzeug gemäß Fig. 1 in einer dritten Verkehrssituation, und
- Fig. 5: zeigt ein Flussdiagramm eines Verfahrens zum Projizieren von Objekten gemäß einem Ausführungsbeispiel.

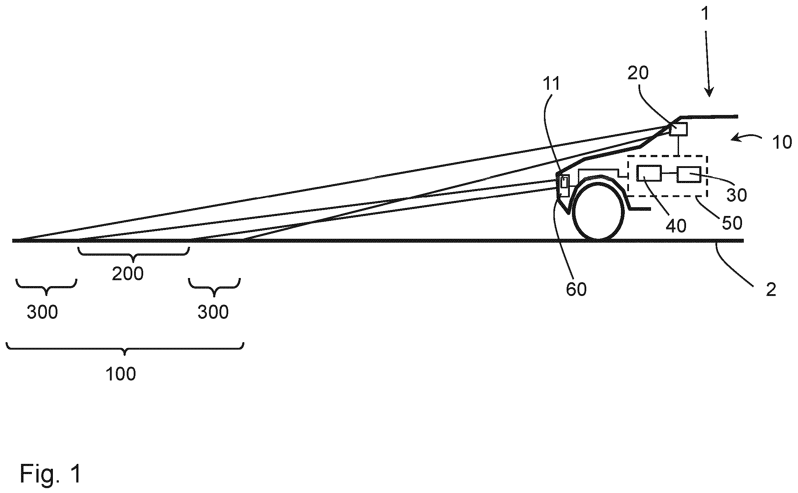

Fig. 1 zeigt schematisch ein Fahrzeug mit einer Vorrichtung zum Projizieren von Objekten gemäß einem Ausführungsbeispiel. Fig. 1 zeigt insbesondere ein Fahrzeug 1, welches auf einer Fahrbahn 2 fährt. Die Fahrbahn 2 wird in Fig. 1 durch eine horizontale gerade Linie symbolisch dargestellt. In dem Fahrzeug 1 ist eine Vorrichtung 10 zum Projizieren von Objekten gemäß einem Ausführungsbeispiel implementiert. Die Vorrichtung 10 umfasst eine Projektionsvorrichtung 11 zum Projizieren von Objekten auf die Fahrbahn 2. Das Fahrzeug 1 weist eine Fahrzeugkamera 20 zum Erfassen einer Umgebung des Fahrzeugs 1 auf. Die Fahrzeugkamera 20 kann insbesondere als Teil der Vorrichtung 10, als ein separates Teil oder als Teil eines Fahrerassistenzsystems des Fahrzeugs 1 ausgebildet sein. Die Fahrzeugkamera 20 kann insbesondere als Teil eines Kamerasystems bzw. Frontkamerasystems des Fahrzeugs 1 ausgebildet sein. Das Kamerasystem kann insbesondere mehrere Kameras umfassen, die an unterschiedlichen Positionen an und/oder in dem Fahrzeug 1 angeordnet sein können. Die Vorrichtung 10 umfasst ferner eine Auswerteeinheit 30 und eine Steuereinheit 40 zum Ansteuern der Projektionsvorrichtung 11. In dem gezeigten Ausführungsbeispiel ist die Auswerteeinheit 30 und die Steuereinheit 40 als Teil des Steuergeräts 50 des Fahrzeugs 1 ausgebildet.

Die Fahrzeugkamera 20 ist dazu ausgebildet, ein Blickfeld 100 zu erfassen. Das Blickfeld 100 der Fahrzeugkamera 20 ist in Fig. 1 symbolisch als ein Abschnitt der Fahrbahn 2 dargestellt. Die Projektionsvorrichtung 11 ist dazu ausgebildet, ein Projektionsobjekt innerhalb eines einstellbaren Projektionsfelds 200 zu projizieren, wobei das einstellbare Projektionsfeld 200 wenigstens teilweise von dem Blickfeld 100 der Fahrzeugkamera 20 erfasst wird. Die Projektionsvorrichtung 11 ist in diesem Ausführungsbeispiel als Teil eines Fahrzeugscheinwerfers 60 ausgebildet. Die Projektionsvorrichtung kann insbesondere eine oder mehrere HD (High Definition) Projektionsmodule zum Bereitstellen von hochaufgelösten Projektionen umfassen. Ein von dem Projektionsfeld 200 freibleibendes Restflickfeld 300 wird in Fig. 1 ebenfalls symbolisch gezeigt.

Die Auswerteeinheit 30 kann dazu ausgebildet bzw. konfiguriert sein, wenigstens einen von einer Sensorik (nicht gezeigt) empfangenen aktuellen Betriebsparameter des Fahrzeugs 1 auszuwerten und ein erstes dem wenigstens einem aktuellen Betriebsparameter entsprechendes Sollprojektionsfeld zu ermitteln. Die Auswerteeinheit 30 kann ferner dazu ausgebildet sein, zu überprüfen, ob ein von dem ersten Sollprojektionsfeld freibleibendes Restblickfeld 300 der Fahrzeugkamera 20 einem vordefinierten Hinlänglichkeitskriterium zum Erfassen einer Umgebung durch die Fahrzeugkamera 20 genügen würde. Die Auswerteeinheit 30 kann ferner dazu ausgebildet sein, basierend auf dem ersten Sollprojektionsfeld und auf dem Hinlänglichkeitskriterium ein zweites korrigiertes Sollprojektionsfeld zu ermitteln und der Steuereinheit 40 zum Verwenden als neues Sollprojektionsfeld beim Einstellen des Projektionsfelds bereitzustellen.

In einigen Ausführungsbeispielen ist die Auswerteeinheit 30 dazu ausgebildet, eine oder mehrere Korrekturmaßnahmen zum Anpassen eines aktuellen Projektionsfelds zu ermitteln, so dass das Einstellen des Projektionsfelds durch das Anpassen des aktuellen Projektionsfelds gemäß der ermittelten einen oder mehreren Korrekturmaßnahmen erfolgen kann.

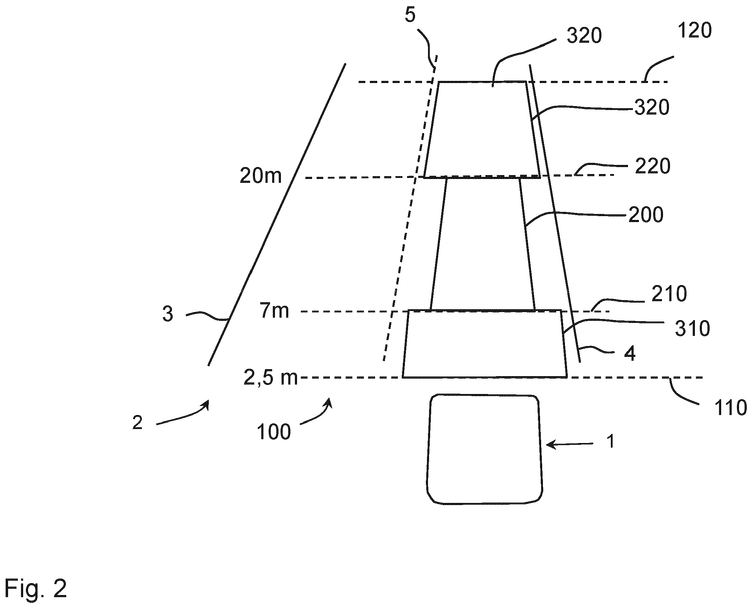

Fig. 2 zeigt schematisch ein Fahrzeug gemäß Fig. 1 in einer ersten Verkehrssituation. In der in Fig. 2 dargestellten Verkehrssituation fährt das Fahrzeug 1 auf einer rechten Seite der Fahrbahn 2. Die Fahrbahn 2 weist Seitenstreifen 3 und 4 (als durchgezogene Linien dargestellt) und einen Mittelstreifen 5 (gestrichelt dargestellt) auf. Das Fahrzeug 1 umfasst die Projektionsvorrichtung 11 gemäß Fig. 1 zum Projizieren von Objekten in einem einstellbaren Projektionsfeld 200. Das Projektionsfeld 200 liegt vor dem Fahrzeug 1 und weist Form eines im Wesentlichen rechteckigen länglichen Abschnitts der Fahrbahn 2 auf. Das Projektionsfeld 200 liegt innerhalb des Blickfelds 100 der Fahrzeugkamera 20. Das Projektionsfeld 200 wird in der Längsrichtung von einem ersten freien bzw. von Projektionen freien Feld 310 des Restblickfelds 300 und von einem zweiten freien Feld 320 des Restblickfelds 300 eingeschränkt. Das erste freie Feld 310 erstreckt sich zwischen einem ersten an dem Fahrzeug 1 näher liegenden Ende 110 des Blickfelds 100 und einer ersten an dem Fahrzeug 1 näher liegenden Grenze 210 des Projektionsfelds 200. Das zweite Freie Feld 320 erstreckt sich zwischen einem zweiten von dem Fahrzeug 1 ferner liegenden Ende 120 des Blickfelds 100 und einer zweiten von dem Fahrzeug 1 ferner liegenden Grenze 220 des Projektionsfelds 200.

Die Form bzw. die Länge des Projektionsfelds 200, des ersten freien Felds 310 und des zweiten freien Felds 320 hängt von einer aktuellen Fahrsituation ab. Insbesondere erfasst die Sensorik des Fahrzeugs 1 die aktuelle Fahrsituation und die Steuereinheit 40 steuert die Projektionsvorrichtung 11 entsprechend an, um das Projektionsfeld 200 gemäß der aktuellen Fahrsituation einzustellen. Die Positionen der Feldgrenzen entlang der Fahrbahn werden in Fig. 2 in Meter angegeben, und zwar gemessen von der Vorderseite des Fahrzeugs 1. Die erste Grenze 210 bzw. der Anfang des Projektionsfelds 200 ist von der Vorderseite des Fahrzeugs 1 um etwa 7 m entfernt und die zweite Grenze 220 des Projektionsfelds 200 ist von der Vorderseite des Fahrzeugs 2 um etwa 20 m entfernt. Das erste Ende des Blickfelds 110 des Blickfelds 100 liegt in 2,5 m vor dem Fahrzeug 1. Die in Fig. 2 dargestellte Feldkonfiguration entspricht einer Fahrsituation, wenn das Fahrzeug auf einer geraden Fahrbahn 2 mit einer verhältnismäßig geringen Geschwindigkeit fährt. In einer Fahrsituation, wenn das Fahrzeug in einer Kurve mit einem aktuellen Kurvenradius fährt, kann das Projektionsfeld 200 eine Biegung mit einem dem aktuellen Kurvenradius entsprechenden Biegeradius aufweisen.

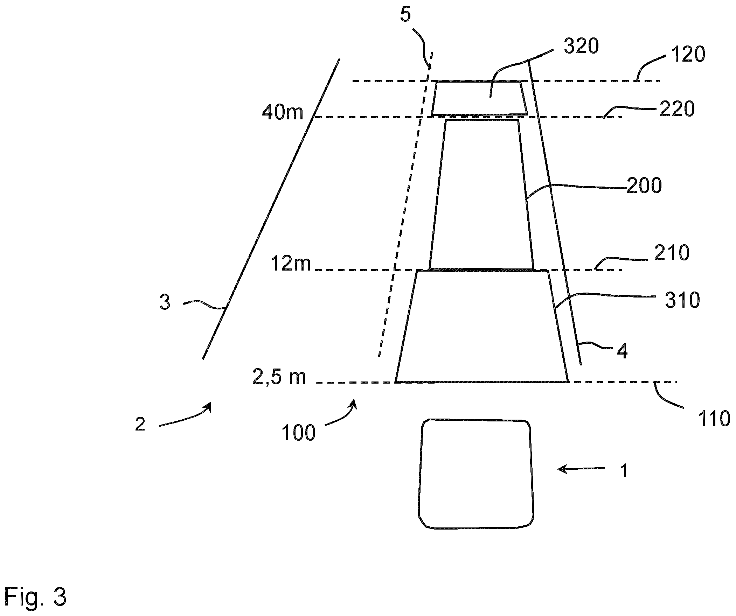

Fig. 3 zeigt schematisch ein Fahrzeug gemäß Fig. 1 in einer zweiten Verkehrssituation. Die in Fig. 3 dargestellte Verkehrssituation entspricht im Wesentlichen der Verkehrssituation gemäß Fig. 2, wobei das Fahrzeug 1 mit einer erhöhten Geschwindigkeit fährt. Wie anhand der Fig. 3 zu sehen ist, ändert sich bei höheren Geschwindigkeiten sowohl die Länge als auch die Position des Projektionsfelds 200. Im Vergleich zu der in Fig. 2 dargestellten Situation hat sich dabei die erste Grenze 210 des Projektionsfelds 200 von 7 m auf 12 m verschoben und die zweite Grenze 220 des Projektionsfelds 200 hat sich von 20 m auf 40 m verschoben. Die erste Grenze des Blickfelds 100 hat sich dabei nicht verschoben und liegt weiterhin in einer Entfernung von 2,5 m vor dem Fahrzeug 1. In dem gezeigten Ausführungsbeispiel entspricht diese Distanz der absoluten bzw. geometrisch bedingten Erfassungsgrenze der Fahrzeugkamera 20.

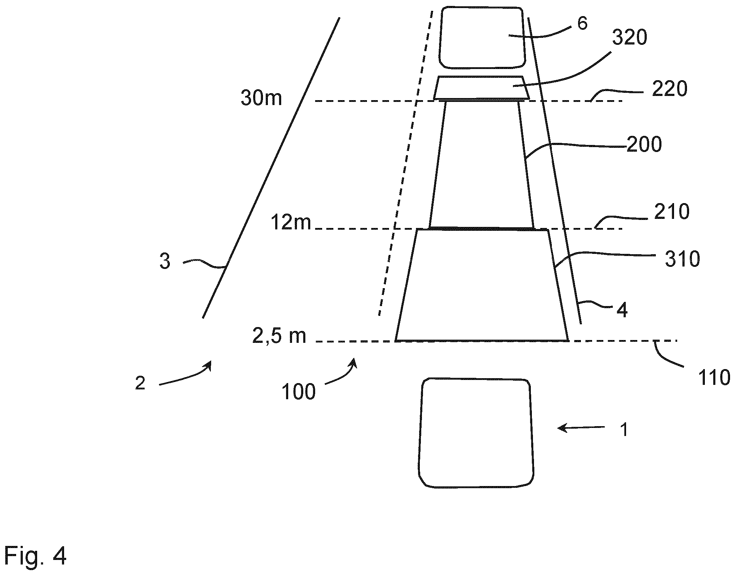

Fig. 4 zeigt schematisch ein Fahrzeug gemäß Fig. 1 in einer dritten Verkehrssituation. Die dritte Verkehrssituation entspricht im Wesentlichen der zweiten Verkehrssituation, wobei sich vor dem Fahrzeug 1 ein vorausfahrendes Fahrzeug 6 befindet. Die Fahrzeug-Sensorik des Fahrzeugs 1 erfasst dabei die Fahrsituation und die Steuereinheit 40 steuert die Projektionsvorrichtung 11 so an, dass zwischen dem vorausfahrenden Fahrzeug 6 und der zweiten Grenze 220 des Projektionsfelds 200 ein ausreichender Abstand zur Erfassung der Fahrbahn 2 durch die Fahrzeugkamera 20 verbleibt. Dadurch verkürzt sich das Projektionsfeld 200 von 28 m, wie in Fig. 3 dargestellt, auf 18 m und der Abstand zwischen der zweiten Grenze 220 des Projektionsfelds 200 und der Vorderseite des Fahrzeugs 1 von 40 m, wie in Fig. 3 dargestellt, auf 30 m.

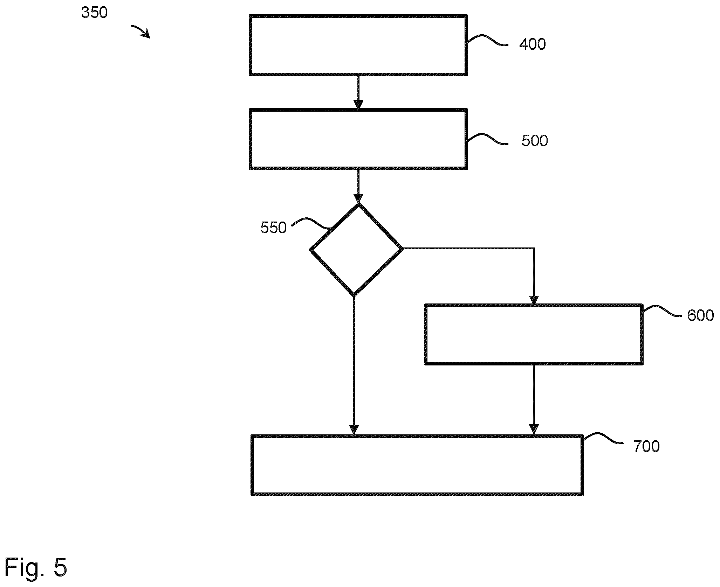

Fig. 5 zeigt ein Flussdiagramm eines Verfahrens zum Projizieren von Objekten gemäß einem Ausführungsbeispiel. Gemäß dem Verfahren 350 wird in einem Verfahrensschritt 400 wenigstens ein aktueller Betriebsparameter des Fahrzeugs 1 erfasst und in einem darauffolgenden Verfahrensschritt 500 ein dem wenigstens einen aktuellen Betriebsparameter entsprechendes erstes Sollprojektionsfeld ermittelt. Der wenigstens eine Betriebsparameter kann insbesondere aktuelle Fahrgeschwindigkeit, Kurvenradius und/oder Gierrate des Fahrzeugs 1 umfassen. Das erste Sollprojektionsfeld kann insbesondere anhand einer in der Speichereinheit der Auswerteeinheit 30 hinterlegten funktionalen Abhängigkeit zwischen dem Projektionsfeld 200 und dem wenigstens einen Betriebsparameter des Fahrzeugs 1 und/oder anhand einer Look-Up-Tabelle ermittelt werden. In einigen Ausführungsbeispielen wird in einem vorausgehenden Verfahrensschritt, insbesondere unmittelbar nach dem Aktivieren der Vorrichtung 10 ein voreingestelltes bzw. initiales Projektionsfeld eingestellt.

In einem Abfrageschritt 550 wird überprüft, ob beim Einstellen des in dem Verfahrensschritt 500 ermittelten ersten Sollprojektionsfelds ein von dem Projektionsfeld freibleibendes Restblickfeld einem Hinlänglichkeitskriterium zum Erfassen einer Umgebung durch die Fahrzeugkamera genügen würde. Genügt das Restblickfeld dem Hinlänglichkeitskriterium nicht, so wird in einem Verfahrensschritt 600 ein zweites korrigiertes Sollprojektionsfeld basierend auf dem ersten Sollprojektionsfeld und auf dem Hinlänglichkeitskriterium ermittelt und zum Einstellen des Projektionsfelds beim Ansteuern der Projektionsvorrichtung 11 in einem Verfahrensschritt 600 verwendet. Ergibt sich beispielsweise die Überprüfung in dem Verfahrensschritt 550, dass die Länge des ersten freien Felds 320 vor dem ersten Sollprojektionsfeld für die Erfassung der Umgebung bzw. der Fahrbahn 2 nicht ausreicht, so wird in dem Verfahrensschritt 600 das zweites korrigiertes Sollprojektionsfeld ermittelt. Die Projektionsvorrichtung 11 kann dann beispielsweise in dem Verfahrensschritt 700 so angesteuert werden, dass die Länge des Projektionsfelds 200 gekürzt und/oder das Projektionsfeld 200 nach vorne bzw. von dem Fahrzeug 1 weg verschoben wird. Ergibt der Abfrageschritt 550 hingegen, dass das Restblickfeld dem Hinlänglichkeitskriterium genügt, so wird in dem Verfahrensschritt 700 das erste Sollprojektionsfeld zum Einstellen des Projektionsfelds 200 der Projektionsvorrichtung 11 verwendet.

In einigen Ausführungsbeispielen wird in dem Schritt 550, oder in einem separaten insbesondere dem Verfahrensschritt 550 vorausgehenden Verfahrensschritt, überprüft, ob das in dem Verfahrensschritt 500 ermittelte erste Sollprojektionsfeld dem aktuellen Projektionsfeld 200 der Projektionsvorrichtung 11 entspricht. Wird dabei festgestellt, dass das ermittelte Sollprojektionsfeld dem aktuellen Projektionsfeld 200 entspricht, so wird das Verfahren mit dem Verfahrensschritt 400 fortgesetzt. Somit kann eine korrekte Einstellung der Projektionsvorrichtung 11 ressourcenschonend bzw. ohne zusätzliche Ansteuerung der Projektionsvorrichtung 11 in dem Verfahrensschritt 700 beibehalten werden.

In einigen Ausführungsformen wird in dem Verfahrensschritt 400, oder in einem separaten Verfahrensschritt, eine aktuelle Fahrsituation erfasst und in dem Schritt 500 wird das erste Sollprojektionsfeld wenigstens teilweise basierend auf der aktuellen Fahrsituation ermittelt. Insbesondere kann mittels der Fahrzeug-Sensorik andere Verkehrsteilnehmer erfasst werden. Beispielsweise kann mittels der Fahrzeugkamera 20 andere sich in dem Blickfeld 100 der Fahrzeugkamera 20 befindenden Fahrzeuge erfasst werden.

Wird beispielsweise ein vorausfahrendes Fahrzeug 6 in dem Blickfeld 100 der Fahrzeugkamera 20 erfasst, so wird überprüft, ob das verfügbare Restblickfeld 300, insbesondere das zweite freie Feld 320 des Restblickfelds 300 für die Erfassung der Fahrbahn 2 durch die Fahrzeugkamera 20 ausreicht. Ergibt sich die Überprüfung, dass die Länge des zweiten freien Felds 320 für die Erfassung der Fahrbahn 2 nicht ausreicht, so wird die Länge des Projektionsfelds 200 gekürzt und/oder das Projektionsfeld 200 insgesamt näher zu dem Fahrzeug 1 verschoben, um eine adäquate bzw. zuverlässige Erfassung der Fahrzeugumgebung bzw. der Fahrbahn 2 zu erreichen.

Die oben beschriebenen Verfahrensschritte können insbesondere wiederholt durchgeführt werden, so dass das Projektionsfeld 200 jeweils aktuellen Fahrsituationen angepasst werden kann.

In einigen Ausführungsbeispielen wird in dem Verfahrensschritt 400, oder in einem separaten Verfahrensschritt, das Blickfeld 100 mit der Fahrzeugkamera 20 erfasst und eine erste Sequenz von Bildaufnahmen bzw. Frames erzeugt. In einigen Ausführungsbeispielen wird die Fahrzeugkamera 20 vorher insbesondere zusammen mit dem Fahrerassistenzsystem des Fahrzeugs 1 aktiviert. Eine Sequenz von Frames kann grundsätzlich ein oder mehrere Frames bzw. Bildaufnahmen umfassen. In einem darauffolgenden Verfahrensschritt 500 kann die erste Sequenz von Frames zum Erkennen wenigstens eines Projektionsobjekts in wenigstens einem Teilblickfeld 200 ausgewertet werden. In dem Abfrageschritt 550, oder in einem separaten Verfahrensschritt, kann geprüft werden, ob ein Projektionsobjekt in dem Teilflickfeld zu erkennen ist. Wird dabei festgestellt, dass beim Auswerten der ersten Sequenz von Frames kein Projektionsobjekt innerhalb des Teilblickfelds erkannt wurde, so wird die erste Sequenz von Frames zur Weitergabe an das Fahrerassistenzsystem herangezogen. Wird hingegen in dem Abfrageschritt festgestellt, dass sich ein Projektionsobjekt in dem Teilblickfeld befindet, so kann in einem darauffolgenden Schritt das erkannte Projektionsobjekt maskiert werden. Das Maskieren des erkannten Projektionsobjekts kann insbesondere Erzeugen einer zweiten Sequenz von Frames unter Maskierung des erkannten Projektionsobjekts umfassen. Dem Fahrerassistenzsystem wird dabei die zweite Sequenz von Frames bzw. Bildaufnahmen zur Erfassung der Fahrzeugumgebung bereitgestellt. Das Verfahren kann ferner einen Markierungsschritt, insbesondere nach dem Auswerteschritt bzw. vor dem Erzeugen der zweiten Sequenz von Frames im Schritt, umfassen. Beim Markieren wird ein in dem wenigstens einen Teilblickfeld erkanntes Projektionsobjekt markiert, wobei das erkannte Projektionsobjekt als markiert gekennzeichnet wird. Beim Markieren eines erkannten Projektionsobjekts kann dem erkannten Projektionsobjekt ein Label bzw. Identifikationskennzeichen zugeordnet werden. In einigen Ausführungsbeispielen erfolgt das Markieren von erkannten Objekten frameweise (on a frame-to-frame basis), wobei eine in einem Frame erfolgte Markierung auf ein nachfolgendes Frame übertragen werden kann. Die Übertragung einer bereits bestehenden Markierung auf nachfolgende Frames kann den Rechenaufwand für die Wiedererkennung bzw. erneute Markierung des bereits erkannten Projektionsobjekts reduzieren.

Die Anpassung bzw. Korrektur des Projektionsfelds 200 kann insbesondere eine Verschiebung und/oder Verformung des Projektionsfelds 200 umfassen. Die Verschiebung kann insbesondere kann basierend auf der Fahrzeuggeschwindigkeit und/oder auf dem Kurvenradius ermittelt werden.

In einigen Ausführungsbeispielen beginnt das Projektionsfeld 200 bei einer vordefinierten fixierten Position, beispielsweise in etwa 10 m vor dem Fahrzeug 1. Mit der wachsenden Geschwindigkeit des Fahrzeugs verlängert sich das Projektionsfeld 200. Ab einer bestimmten Geschwindigkeit, e.g. ab 50 km/h, kann zusätzlich zu der Verlängerung des Projektionsfeldes auch eine Verschiebung des Anfangs bzw. der ersten Grenze 210 des Projektionsfeldes 200 einsetzen. Dabei verschiebt sich die erste Grenze 210 des Projektionsfeldes 200 weg von dem Fahrzeug 1. Aufgrund dieser Bewegung wird der von den Projektionen frei Bereich vor dem Fahrzeug größer, so dass die Fahrbahn trotz der Verlängerung des gesamten Projektionsfelds 200 für eine zuverlässige Erfassung der Fahrbahn 2 durch die Fahrzeugkamera 20 ausreicht. Ein Spurerhaltungs- bzw. Erkennungsalgorithmus des Fahrassistenzsystems kann dabei diesen von Projektionen freien Bereich mehr heranziehen bzw. höher gewichten als fernerliegende Bereiche mit Projektionsobjekten, wodurch die Zuverlässigkeit des Fahrassistenzsystems und die Fahrsicherheit insgesamt erhöht werden kann.

### Bezugszeichenliste

- 1: Fahrzeug
- 2: Fahrbahn

- 10: Vorrichtung
- 11: Projektionsvorrichtung
- 20: Fahrzeugkamera
- 30: Auswerteeinheit
- 40: Steuereinheit
- 50: Steuergerät
- 60: Fahrzeugscheinwerfer

- 100: Blickfeld
- 110: erstes Ende des Blickfelds
- 120: zweites Ende des Blickfelds
- 200: Blickfeld
- 210: erste Grenze des Projektionsfelds
- 220: zweite Grenze des Projektionsfelds

- 300: Restblickfeld
- 310: erstes freies Feld
- 320: zweites freies Feld

- 350: Verfahren
- 400: Verfahrensschritt
- 500: Verfahrensschritt
- 550: Verfahrensschritt
- 600: Verfahrensschritt
- 700: Verfahrensschritt

## Patentansprüche

1. Verfahren zum Projizieren von Objekten mittels einer Projektionsvorrichtung (11) eines Fahrzeugs (1), wobei die Projektionsvorrichtung (11) dazu ausgebildet ist, ein Projektionsobjekt innerhalb eines einstellbaren wenigstens teilweise von einem Blickfeld (100) einer Fahrzeugkamera (20) erfassbaren Projektionsfelds (200) zu projizieren, und wobei das Verfahren Ermitteln eines Sollprojektionsfelds zum Einstellen des einstellbaren Projektionsfelds (200) und Einstellen des Projektionsfeld (200) gemäß dem ermittelten Sollprojektionsfeld umfasst, wobei das Ermitteln des Sollprojektionsfelds folgende Schritte umfasst:
- Erfassen (400) wenigstens eines aktuellen Betriebsparameters des Fahrzeugs (1) und Ermitteln (500) eines ersten dem wenigstens einen Betriebsparameter entsprechenden Sollprojektionsfelds,
**dadurch gekennzeichnet, dass** das Ermitteln des Sollprojektionsfelds weiterhin folgende Schritte umfasst
- Überprüfen (550), ob ein von dem Sollprojektionsfeld freibleibendes Restblickfeld (300) der Fahrzeugkamera (20) einem vordefinierten Hinlänglichkeitskriterium zum Erfassen einer Umgebung durch die Fahrzeugkamera (11) genügen würde, und, wenn nicht,
- Ermitteln (600) eines zweiten korrigierten Sollprojektionsfelds basierend auf dem ersten Sollprojektionsfeld und auf dem Hinlänglichkeitskriterium, und
- Verwenden des zweiten Sollprojektionsfelds als neues Sollprojektionsfeld zum Einstellen des Projektionsfelds (200) der Projektionsvorrichtung (11), damit das von dem Projektionsfeld (200) freies Restblickfeld (300) dem Hinlänglichkeitskriterium zum Erfassen der Umgebung durch die Fahrzeugkamera (20) genügt.

2. Verfahren nach Anspruch 1, wobei der wenigstens eine aktuelle Betriebsparameter eine aktuelle Fahrgeschwindigkeit und/oder einen aktuellen Kurvenradius des Fahrzeugs (1) umfasst.

3. Verfahren nach Anspruch 1 oder 2, wobei das Hinlänglichkeitskriterium eine Bedingung beinhaltet, dass das Restblickfeld (300) wenigstens ein Kernblickfeld der Fahrzeugkamera (20) umfasst.

4. Verfahren nach einem der vorhergehenden Ansprüche, wobei das Hinlänglichkeitskriterium eine Bedingung beinhaltet, dass zwischen dem Projektionsfeld (200) und einer Vorderseite des Fahrzeugs (1) ein vordefinierter Mindestabstand eingehalten ist.

5. Verfahren nach einem der vorhergehenden Ansprüche, wobei das Hinlänglichkeitskriterium eine Bedingung beinhaltet, dass zwischen dem Projektionsfeld (200) und einem vorausfahrenden Fahrzeug (6) ein vordefinierter Mindestabstand eingehalten ist.

6. Verfahren nach einem der vorhergehenden Ansprüche, wobei das Verfahren ferner Ermitteln einer oder mehrerer Korrekturmaßnahmen zum Anpassen eines aktuellen Projektionsfelds umfasst, und wobei das Einstellen des Projektionsfelds das Anpassen des aktuellen Projektionsfelds gemäß der ermittelten einen oder mehreren Korrekturmaßnahmen umfasst.

7. Verfahren nach Anspruch 6, wobei die eine oder mehrere Korrekturmaßnahmen, eine Verschiebung und/oder Verformung des aktuellen Projektionsfelds umfasst.

8. Vorrichtung zum Projizieren von Objekten, umfassend:
- eine Projektionsvorrichtung (11), wobei die Projektionsvorrichtung (11) dazu ausgebildet ist, ein Projektionsobjekt innerhalb eines einstellbaren wenigstens teilweise von einem Blickfeld (100) einer Fahrzeugkamera (20) erfassbaren Projektionsfelds (200) zu projizieren,
- eine Auswerteeinheit (30) zum Ermitteln eines Sollprojektionsfelds, und
- eine Steuereinheit (40) zum Ansteuern der Projektionsvorrichtung (11), so dass das Projektionsfeld (200) gemäß dem ermittelten Sollprojektionsfeld eingestellt werden kann, wobei die Auswerteeinheit (30) dazu ausgebildet ist:
- wenigstens einen von einer Sensorik empfangenen aktuellen Betriebsparameter des Fahrzeugs (1) auszuwerten und ein erstes dem wenigstens einem aktuellen Betriebsparameter entsprechendes Sollprojektionsfeld zu ermitteln, **dadurch gekennzeichnet, dass** die Auswerteeinheit weiterhin ausgebildet ist:
- zu überprüfen, ob ein von dem ersten Sollprojektionsfeld freibleibendes Restblickfeld (300) der Fahrzeugkamera (20) einem vordefinierten Hinlänglichkeitskriterium zum Erfassen einer Umgebung durch die Fahrzeugkamera (20) genügen würde, und, wenn nicht,
- basierend auf dem ersten Sollprojektionsfeld und auf dem Hinlänglichkeitskriterium ein zweites korrigiertes Sollprojektionsfeld zu ermitteln und der Steuereinheit (40) zum Verwenden als neues Sollprojektionsfeld zum Einstellen des Projektionsfelds (200) bereitzustellen.

9. Vorrichtung nach Anspruch 8, wobei die Auswerteeinheit (30) dazu ausgebildet ist, eine oder mehrere Korrekturmaßnahmen zum Anpassen eines aktuellen Projektionsfelds zu ermitteln, so dass das Einstellen des Projektionsfelds (200) durch das Anpassen des aktuellen Projektionsfelds gemäß der ermittelten einen oder mehreren Korrekturmaßnahmen erfolgen kann.

10. Fahrzeug, wobei das Fahrzeug ein Fahrerassistenzsystem, eine Fahrzeugkamera zum Erfassen einer Umgebung des Fahrzeugs (1) für das Fahrerassistenzsystem und wenigstens eine Vorrichtung (10) zum Projizieren von Objekten nach einem der Ansprüche 8 oder 9 aufweist.

## Claims

1. Method for projecting objects by means of a projection device (11) of a vehicle (1), wherein the projection device (11) is designed to project a projection object within an adjustable projection field (200) at least partially detectable by a field of view (100) of a vehicle camera (20), and wherein the method determining a target projection field for adjusting the adjustable projection field (200) and adjusting the projection field (200) according to the determined target projection field, wherein the determining of the target projection field comprises the following steps:
- detecting (400) at least one current operating parameter of the vehicle (1) and determining (500) a first desired projection field corresponding to the at least one operating parameter,
**characterised in that** the determination of the desired projection field further comprises the following steps
- checking (550) whether a residual field of view (300) of the vehicle camera (20) remaining free of the target projection field would satisfy a predefined sufficiency criterion for detecting an environment by the vehicle camera (11), and, if not,
- determining (600) a second corrected target projection field based on the first target projection field and on the sufficiency criterion, and
- using the second desired projection field as a new desired projection field for adjusting the projection field (200) of the projection device (11), so that the residual field of view (300) free from the projection field (200) meets the sufficiency criterion for detecting the environment by the vehicle camera (20).

2. Method according to claim 1, wherein the at least one current operating parameter comprises a current driving speed and/or a current curve radius of the vehicle (1).

3. Method of claim 1 or 2, wherein the sufficiency criterion includes a condition that the residual field of view (300) comprises at least one core field of view of the vehicle camera (20).

4. Method according to any one of the preceding claims, wherein the sufficiency criterion includes a condition that between the projection field (200) and a front side of the vehicle (1) a predefined minimum distance is maintained.

5. Method according to any preceding claim, wherein the sufficiency criterion includes a condition that a predefined minimum distance is maintained between the projection field (200) and a vehicle (6) travelling ahead.

6. Method according to any one of the preceding claims, wherein the method further comprises determining one or more corrective measures for adjusting a current projection field, and wherein the adjustment of the projection field the adjustment of the current projection field according to the determined one or more corrective measures comprises.

7. Method according to claim 6, wherein the one or more corrective measures comprise a displacement and/or deformation of the current projection field.

8. Apparatus for projecting objects comprising:
- a projection device (11), wherein the projection device (11) is designed for this purpose, a projection object within an adjustable at least partially of a field of view (100) of a vehicle camera (20) to be detected projection field (200) to project,
- an evaluation unit (30) for determining a target projection field, and
- a control unit (40) for controlling the projection device (11), so that the projection field (200) according to the determined desired projection field can be adjusted, wherein the evaluation unit (30) is designed for this purpose:
- evaluate at least one current operating parameter of the vehicle (1) received by a sensor system and determine a first target projection field corresponding to the at least one current operating parameter,
- check whether a residual field of view (300) of the vehicle camera (20) remaining free of the first target projection field would satisfy a predefined sufficiency criterion for detecting an environment by the vehicle camera (20), and, if not,
- on the basis of the first desired projection field and on the sufficiency criterion, a second corrected desired projection field and the control unit (40) for use as a new desired projection field for adjusting the projection field (200) to provide.

9. Apparatus of claim 8, wherein the evaluation unit (30) is adapted to determine one or more corrective measures for adjusting a current projection field, so that the adjustment of the projection field (200) can be done by adjusting the current projection field according to the determined one or more corrective measures.

10. Vehicle, wherein the vehicle a driver assistance system, a vehicle camera for detecting an environment of the vehicle (1) for the driver assistance system and at least one device (10) for projecting objects according to any one of claims 8 or 9 having.

## Revendications

1. Procédé de projection d'objets à l'aide d'un dispositif de projection (11) d'un véhicule (1), dans lequel le dispositif de projection (11) est conçu pour projeter un objet de projection à l'intérieur d'un champ de projection (200) réglable détectable au moins partiellement par un champ de vision (100) d'une caméra de véhicule (20), et dans lequel le procédé comprend la détermination d'un champ de projection cible pour régler le champ de projection réglable (200) et le réglage du champ de projection (200) en fonction du champ de projection déterminé, dans lequel la détermination Le champ de projection cible comprend les étapes suivantes :
- détection (400) d'au moins un paramètre de fonctionnement actuel du véhicule (1) et détermination (500) d'un premier champ de projection de consigne correspondant audit au moins un paramètre de fonctionnement,
**caractérisé en ce que** la détermination du champ de projection théorique comprend en outre les étapes suivantes :
- vérifier (550) si un champ de vision résiduel (300) de la caméra du véhicule (20), qui ne dépend pas du champ de projection théorique, satisferait à un critère d'allongement prédéfini pour la détection d'un environnement par la caméra du véhicule (11) et, dans le cas contraire,
- déterminer (600) un second champ de projection cible corrigé sur la base du premier champ de projection cible et du critère d'adéquation, et
- utiliser le deuxième champ de projection théorique comme nouveau champ de projection théorique pour régler le champ de projection (200) du dispositif de projection (11), de sorte que le champ de vision résiduel (300) libre du champ de projection (200) satisfait au critère d'adéquation pour la détection de l'environnement par la caméra du véhicule (20).

2. Procédé selon la revendication 1, dans lequel ledit au moins un paramètre de fonctionnement actuel comprend une vitesse de déplacement actuelle et/ou un rayon de courbure actuel du véhicule (1).

3. Procédé selon la revendication 1 ou 2, dans lequel le critère d'allongement comprend une condition selon laquelle le champ de vision résiduel (300) comprend au moins un champ de vision central de la caméra de véhicule (20).

4. Procédé selon l'une quelconque des revendications précédentes, dans lequel le critère d'allongement comprend une condition selon laquelle une distance minimale prédéfinie est respectée entre le champ de projection (200) et une face avant du véhicule (1).

5. Procédé selon l'une quelconque des revendications précédentes, dans lequel le critère d'allongement comprend une condition selon laquelle une distance minimale prédéfinie est respectée entre le champ de projection (200) et un véhicule précédent (6).

6. Procédé selon l'une quelconque des revendications précédentes, dans lequel le procédé comprend en outre la détermination d'une ou plusieurs mesures correctives pour ajuster un champ de projection actuel, et dans lequel l'ajustement du champ de projection comprend l'ajustement du champ de projection actuel en fonction des une ou plusieurs mesures correctives déterminées.

7. Procédé selon la revendication 6, dans lequel la ou les actions correctives comprennent un déplacement et/ou une déformation du champ de projection actuel.

8. Appareil de projection d'objets comprenant :
- un dispositif de projection (11), le dispositif de projection (11) étant adapté pour projeter un objet de projection à l'intérieur d'un champ de projection (200) réglable détectable au moins partiellement par un champ de vision (100) d'une caméra de véhicule (20),
- une unité d'évaluation (30) pour déterminer un champ de projection théorique, et
- une unité de commande (40) pour commander le dispositif de projection (11) de sorte que le champ de projection (200) puisse être réglé en fonction du champ de projection de consigne déterminé, l'unité d'évaluation (30) étant conçue pour :
- évaluer au moins un paramètre de fonctionnement actuel du véhicule (1) reçu par un système de capteurs et déterminer un premier champ de projection de consigne correspondant au moins un paramètre de fonctionnement actuel,
- vérifier si un champ de vision résiduel (300) de la caméra du véhicule (20), qui ne dépend pas du premier champ de projection théorique, satisferait à un critère d'allongement prédéfini pour la détection d'un environnement par la caméra du véhicule (20), et, dans le cas contraire,
- déterminer un deuxième champ de projection cible corrigé sur la base du premier champ de projection cible et sur le critère de suffisance et mettre à la disposition de l'unité de commande (40) un nouveau champ de projection cible pour régler le champ de projection (200).

9. Appareil selon la revendication 8, dans lequel l'unité d'évaluation (30) est adaptée pour déterminer une ou plusieurs mesures correctives pour ajuster un champ de projection actuel de sorte que l'ajustement du champ de projection (200) peut être effectué en ajustant le champ de projection actuel en fonction de la ou des mesures correctives déterminées.

10. Véhicule comprenant un système d'assistance à la conduite, une caméra de véhicule pour détecter un environnement du véhicule (1) pour le système d'assistance à la conduite et au moins un dispositif (10) pour projeter des objets selon l'une quelconque des revendications 8 ou 9.
